# EUROPEAN PATENT APPLICATION

(11) **EP 4 640 600 A1**
(43) Date of publication of application: **29.10.2025**
(21) Application number: 23905327.5
(22) Date of filing: 08.09.2023
(51) Int. Cl.: B65G 49/06, B65G 47/24

(54) **GLASS EDGE-ALIGNMENT CONVEYING DEVICE AND METHOD**

(30) Priority: 23.12.2022 CN 202211665776
(71) Applicant: China Triumph International Engineering Co., Ltd., Shanghai 200063 (CN); China National Building Material Group Co., Ltd., Beijing 100036 (CN)
(72) Inventor: PENG, Shou, Shanghai 200063 (CN); LIU, Rui, Shanghai 200063 (CN); XU, Haiting, Shanghai 200063 (CN); MA, Yan, Shanghai 200063 (CN); CHENG, Ming, Shanghai 200063 (CN); ZHANG, Yin, Shanghai 200063 (CN); WEI, Shaokun, Shanghai 200063 (CN); SHEN, Gang, Shanghai 200063 (CN); SUN, Bo, Shanghai 200063 (CN); ZHANG, Guojin, Shanghai 200063 (CN); GE, Zhiliang, Shanghai 200063 (CN)
(74) Representative: Kailuweit & Uhlemann Patentanwälte Partnerschaft mbB
(86) International application number: PCT/CN2023/117761
(87) International publication number: WO 2024/131150

(57) **Abstract**

The present disclosure provides a glass (600) edge-aligning conveying device and method. The device includes a transverse edge correction zone (110) and a longitudinal edge alignment zone (120) which operate independently; an edge stopping device (200), wherein the edge stopping device (200) moves upward or downward relative to a conveying surface of a roller conveyor, and when a first detection device (510) detects that the glass (600) enters the transverse edge correction zone (110), the edge stopping device (200) moves above the conveying surface to block movement of the glass (600) in an X-axis direction, thereby realizing alignment of transverse edges of the glass; an edge measuring device (300), wherein the edge measuring device (300) moves in a Y-axis direction and is configured to measure a distance L between a longitudinal edge of the glass and a preset positioning line; and a lifting conveying device (400), wherein the lifting conveying device (400) is raised or lowered relative to the conveying surface, and when a second detection device (520) detects that the glass (600) enters the longitudinal edge alignment zone (120), the lifting conveying device (400) is raised above the conveying surface to drive the glass (600) to move for the compensated distance in the Y-axis direction towards the preset positioning line, thereby realizing alignment of the longitudinal edges of the glass. The present disclosure realizes automatic edge alignment and has the characteristics of high stacking precision and efficiency.

## Description

### Background of the Present Disclosure

### FIELD OF DISCLOSURE

The present disclosure relates to the technical field of glass conveying devices, and in particular, to a glass edge-aligning conveying device and method.

### DESCRIPTION OF RELATED ARTS

At present, among the several stacking methods used in a flat glass production line, the vertical stacking has the characteristics of reliable operation, short cycle time, reduced risk of glass surface scratches, and low investment cost, and is suitable for large, medium and small-sized glass and applications with high quality requirements, thus has been widely used. However, after long-distance conveying, flat glass often reaches the vertical stacking station with varying degrees of tilt and lateral position offset. In order to ensure the stacking accuracy of glass onto the container racks, reduce manual corrections, and improve the stacking efficiency, it is urgent to develop a conveying device and method enabling accurate edge alignment of the flat glass.

### SUMMARY OF THE PRESENT DISCLOSURE

Embodiments of the present disclosure aim to provide a glass edge-aligning conveying device and method. The device of the present disclosure includes an edge stopping device, an edge measuring device, and a lifting conveying device, which realizes automatic edge alignment, reduces manual corrections, and improves the stacking accuracy and stacking efficiency of the glass onto the container racks.

In a first aspect, a glass edge-aligning conveying device is provided, wherein the device includes:
a roller conveyor, configured to convey glass in an X-axis direction, wherein the roller conveyor includes a transverse edge correction zone and a longitudinal edge alignment zone which operate independently;
a first detection device, arranged at an entrance of the transverse edge correction zone and configured to detect whether the glass enters the transverse edge correction zone;
an edge stopping device, arranged at an entrance of the transverse edge correction zone, wherein the edge stopping device is capable of moving upward or downward relative to a conveying surface of the roller conveyor, and when the first detection device detects that the glass enters the transverse edge correction zone, the edge stopping device moves to a position above the conveying surface of the roller conveyor to block movement of the glass in the X-axis direction, thereby realizing alignment of transverse edges of the glass;
an edge measuring device, arranged close to the edge stopping device, wherein the edge measuring device is capable of moving in a Y-axis direction and configured to measure a distance L between a longitudinal edge of the glass and a preset positioning line;
a second detection device, arranged at an entrance of the longitudinal edge alignment zone and configured to detect whether the glass enters the longitudinal edge alignment zone; and
a lifting conveying device, arranged in the longitudinal edge alignment zone, wherein the lifting conveying device is capable of being raised or lowered relative to the conveying surface of the roller conveyor, and when the second detection device detects that the glass enters the longitudinal edge alignment zone, the lifting conveying device is raised to a position above the conveying surface to drive the glass to move for a compensated distance (i.e., L-length in the Y-axis of the glass/2) in the Y-axis direction towards the preset positioning line, thereby realizing alignment of the longitudinal edges of the glass.

In an embodiment, the edge stopping device includes a first lifting mechanism, a stopper assembly, and a driving element, wherein the driving element is connected to the first lifting mechanism and drives the same, the stopper assembly is mounted on the first lifting mechanism and driven by the first lifting mechanism to move upward or downward relative to the conveying surface of the roller conveyor, and the stopper assembly is arranged between two adjacent conveying rollers and includes a plurality of stoppers uniformly arranged in the Y-axis direction, wherein each stopper forms a preset angle with the conveying surface of the roller conveyor to align the transverse edges of the glass.

In an embodiment, each stopper includes a connecting portion and a stopping portion, wherein the connecting portion is obliquely fixed to the first lifting mechanism, the stopping portion is vertically installed at a preset angle with respect to the connecting portion, and when the first lifting mechanism rotates up to a preset position, a stopping face on the stopping portion is perpendicular to the conveying surface.

In an embodiment, the edge measuring device includes a servo motor, a linear module, and a photoelectric detector, wherein the linear module is arranged above the roller conveyor and includes a sliding block which slides in the Y-axis direction, the servo motor is configured to drive the linear module to operate, the photoelectric detector is mounted on the sliding block and moves along with the same, and the photoelectric detector is configured to collect positional information of the longitudinal edge of the glass, so as to determine the distance L between the longitudinal edge of the glass and the preset positioning line.

In an embodiment, the lifting conveying device includes a gear motor, a second lifting mechanism, and one or more conveying assemblies, wherein the gear motor is configured to drive the second lifting mechanism to operate, the conveying assemblies are arranged on the second lifting mechanism, and the second lifting mechanism is configured to drive the conveying assemblies to move upward or downward relative to the conveying surface in a Z-axis direction, the conveying assemblies are uniformly arranged among the conveying rollers in the longitudinal edge alignment zone, and the conveying assemblies independently operate in the Y-axis direction to adjust a distance between the glass and the preset positioning line.

In an embodiment, each conveying assembly includes two conveying members which are arranged in the longitudinal edge alignment zone in the Y-axis direction and symmetrically distributed relative to a center line of the conveying surface, and the conveying members are capable of independently operating.

In an embodiment, a controller is further included, where the controller is configured to control the operation of the roller conveyor, the raising and lowering of the edge stopping device, the movement of the edge measuring device, and the raising and lowering and operation of the lifting conveying device, and collect positional information of the first detection device and the second detection device.

In a second aspect of the present disclosure, a glass edge-aligning conveying method is further provided, wherein the glass edge-aligning conveying device according to any embodiment in the first aspect is used, and the method includes:
conveying the glass using the roller conveyor, and setting a preset positioning line on the roller conveyor;
when the first detection device detects that the glass enters the transverse edge correction zone, raising the edge stopping device to a position above the conveying surface of the roller conveyor, so that when the glass is conveyed to the edge stopping device, transverse edges of the glass contact with the edge stopping device and then the glass stops upon abutting against the edge stopping device, thereby realizing alignment of the transverse edges of the glass;
moving the edge measuring device in the Y-axis direction to measure the distance L between the longitudinal edge of the glass and the preset positioning line;
after the measurement is completed, lowering the edge stopping device to a position below the conveying surface of the roller conveyor, so that the glass continues to move forward on the roller conveyor;
when the second detection device detects that the glass enters the longitudinal edge alignment zone, raising the lifting conveying device to a position above the conveying surface and driving the glass to move in the Y-axis direction, so that the glass moves for a compensated distance (i.e., L-length in the Y-axis of the glass/2) towards the preset positioning line, thereby realizing alignment of the longitudinal edges of the glass; and
lowering the lifting conveying device to a position below the conveying surface, so as to convey the glass on the roller conveyor to a stacking zone.

In an embodiment, the preset positioning line is a center line of the roller conveyor in the X-axis direction.

In an embodiment, the step that when the glass is conveyed to the edge stopping device, the transverse edges of the glass contact with the edge stopping device and then the glass stops upon abutting against the edge stopping device includes:
according to a first time point when the first detection device detects that the glass enters the transverse edge correction zone, and combined with an operating speed of the roller conveyor, calculating a second time point when the glass is conveyed to a position of the edge stopping device; and
slowing down the conveying rollers of the roller conveyor before the second time point, so that the glass contacts with the edge stopping device at a low speed and then stops upon abutting against the edge stopping device in a preset time.

The glass edge-aligning conveying device and method in the present disclosure have the following beneficial effects:
The device and method of the present disclosure realize positional correction and alignment of the transverse edges and the longitudinal edges of the flat glass before the flat glass enters a process of vertical stacking, so as to satisfy the requirements of vertical stacking and improve the quality of glass products. Specifically, the device and method of the present disclosure can satisfy the requirements of single-piece gripping and dual-piece gripping of vertical stacking, thereby being applicable to different specifications of glass. The positional correction and alignment of the transverse edges and the longitudinal edges of the glass are carried out before the glass enters the process of vertical stacking, which ensures the stacking precision of the glass onto the container rack. Accurate alignment of the edges of the glass is achieved, and the system is stable and reliable.

### BRIEF DESCRIPTION OF THE DRAWINGS

To describe the technical solutions of the embodiments of the present disclosure more clearly, the following briefly introduces the accompanying drawings required for describing the embodiments. It should be understood that the following accompanying drawings show merely some embodiments of the present disclosure, and therefore should not be considered as a limitation of the scope. Those of ordinary skill in the art may still obtain other related accompanying drawings from these accompanying drawings without creative efforts.
FIG. 1 is a schematic structural diagram of a glass edge-aligning conveying device according to an embodiment of the present disclosure.
FIG. 2 is a schematic structural diagram of an edge stopping device according to an embodiment of the present disclosure.
FIG. 3 is a schematic structural diagram of an edge measuring device according to an embodiment of the present disclosure.
FIG. 4 is a schematic structural diagram of a lifting conveying device according to an embodiment of the present disclosure.

### Reference Numerals

100: roller conveyor;
110: transverse edge correction zone;
120: longitudinal edge alignment zone;
200: edge stopping device;
210: first lifting mechanism;
220: stopper assembly;
221: stopper;
2211: connecting portion;
2212: stopping portion;
230: driving element;
300: edge measuring device;
310: servo motor;
320: linear module;
330: photoelectric detector;
400: lifting conveying device;
410: gear motor;
420: second lifting mechanism;
430: conveying assembly;
431: conveying member;
510: first detection device;
520: second detection device;
600: glass.

### DETAILED DESCRIPTION OF THE PREFERRED EMBODIMENTS

To make the objectives, technical solutions, and advantages of embodiments of the present disclosure clearer, the following clearly and completely describes the technical solutions in the embodiments of the present disclosure with reference to the drawings in the embodiments of the present disclosure. Apparently, the described embodiments are some rather than all of the embodiments of the present disclosure. The assemblies of the embodiments of the present disclosure described and illustrated in the accompanying drawings herein may be arranged and designed in a variety of different configurations.

Accordingly, the following detailed description of the embodiments of the present disclosure provided in the accompanying drawings is not intended to limit the protection scope of the present disclosure, but only to represent selected embodiments of the present disclosure. All other embodiments obtained by those of ordinary skill in the art based on the embodiments of the present disclosure without making creative efforts shall fall within the protection scope of the present disclosure.

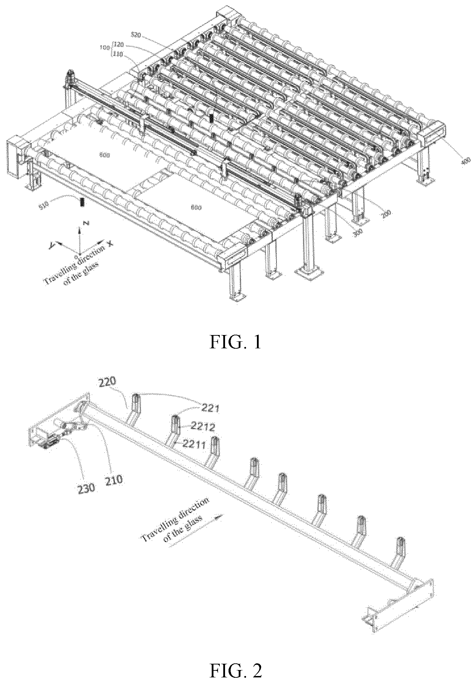

In a first aspect, the present disclosure provides a glass edge-aligning conveying device. FIG. 1 is a schematic structural diagram of a glass edge-aligning conveying device according to an embodiment of the present disclosure. Referring to FIG. 1, the device includes a roller conveyor 100, an edge stopping device 200, an edge measuring device 300, a lifting conveying device 400, a first detection device 510, and a second detection device 520.

The roller conveyor 100 is configured to convey a glass 600 in an X-axis direction, and includes multiple conveying rollers arranged spaced apart in parallel along a forward direction of the glass 600 (i.e., X-axis direction), wherein the conveying rollers are configured to convey the glass. The roller conveyor 100 includes a transverse edge correction zone 110 and a longitudinal edge alignment zone 120 which operate independently. In the transverse edge correction zone 110, the transverse edges of the glass are aligned, and in the longitudinal edge alignment zone 120, the longitudinal edges of the glass are aligned, thereby realizing alignment of the transverse edges and the longitudinal edges of the glass, that is realizing alignment in two directions (i.e., a transverse direction and a longitudinal direction, or an X-axis direction and a Y-axis direction shown in FIG. 1).

The first detection device 510 is arranged at an entrance of the transverse edge correction zone 110 and configured to detect whether the glass enters the transverse edge correction zone 110. The first detection device 510 may be arranged below a conveying surface of the roller conveyor 100, and may be a photoelectric sensor to determine whether the glass enters the transverse edge correction zone 110.

The edge stopping device 200 is arranged at an exit of the transverse edge correction zone 110, the edge stopping device 200 may move upward to a position above the conveying surface of the roller conveyor 100 or move downward to a position below the conveying surface of the roller conveyor 100. When the first detection device 510 detects that the glass enters the transverse edge correction zone 110, the edge stopping device 200 moves up to a position above the conveying surface of the roller conveyor 100 to block movement of the glass in the X-axis direction, thereby realizing alignment of the transverse edges of the glass. That is, the edge stopping device 200 blocks the movement of the glass in the X direction, thereby realizing correction of the transverse edge position of the glass.

The edge measuring device 300 is arranged close to the edge stopping device 200, and the edge measuring device 300 moves in a Y-axis direction and is configured to measure a distance L between a longitudinal edge of the glass and a preset positioning line. The preset positioning line may be a center line of the conveying surface of the roller conveyor, that is, the edge measuring device 300 feeds back the positional information of the edge in the Y direction of the glass relative to the center line of the conveying surface. That is, a distance of the longitudinal edge of the glass deviating from a center line of a stacking zone is determined by measuring the distance between the longitudinal edge of the glass and the preset positioning line.

The second detection device 520 is arranged at an entrance of the longitudinal edge alignment zone 120 and configured to detect whether the glass enters the longitudinal edge alignment zone 120. The second detection device 520 and the first detection device 510 may be arranged in the same mode.

The lifting conveying device 400 is arranged in the longitudinal edge alignment zone 120, and the lifting conveying device 400 may be raised or lowered relative to the conveying surface of the roller conveyor 100. When the second detection device 520 detects that the glass enters the longitudinal edge alignment zone 120, the lifting conveying device 400 is raised to a position at the conveying surface to drive the glass to move in the Y-axis direction towards the preset positioning line until a distance between the longitudinal edges of the glass and the preset positioning line meets the requirement, thereby realizing alignment of the longitudinal edges of the glass. That is, the lifting conveying device 400 drives the glass to move and realizes distance compensation in the Y direction, which contributes to the alignment of the longitudinal edges of the glass. A belt lifting conveying device may be used as the lifting conveying device 400.

In the above implementation process, the roller conveyor, and the correspondingly arranged edge stopping device, edge measuring device, and lifting conveying device achieve the alignment of the transverse edges of the glass during the conveying process of the glass, additionally, by measuring the distance between the longitudinal edge of the glass and the preset positioning line, distance compensation is carried out on the glass in the Y direction, thereby realizing alignment of the longitudinal edges of the glass during the conveying process. Compared with the traditional manual correction, the glass edge-aligning conveying device of the present disclosure adopts full-automatic alignment, with less labor consumption and high stacking precision and palletizing efficiency.

FIG. 2 is a schematic structural diagram of an edge stopping device according to an embodiment of the present disclosure. Referring to FIG. 2, the edge stopping device 200 includes a first lifting mechanism 210, a stopper assembly 220, and a driving element 230. The driving element 230 is connected to the first lifting mechanism 210 and drives the same, and the stopper assembly 220 is mounted on the first lifting mechanism 210 and driven by the first lifting mechanism 210 to move upward or downward relative to the conveying surface of the roller conveyor 100. The stopper assembly 220 is arranged between two adjacent conveying rollers, and includes multiple stoppers 221 uniformly arranged in the Y-axis direction, wherein each stopper 221 forms a preset angle with the conveying surface of the roller conveyor (i.e., each stopper 221 forms a preset angle with a plane in the X-axis direction) to align the transverse edges of the glass. The driving element 230 is a pneumatic cylinder, and an end of a piston rod of the pneumatic cylinder is connected to the first lifting mechanism 210. The stopper assembly 220 is driven by the first lifting mechanism 210 to move upward or downward relative to the conveying surface. When the stopper assembly 220 is driven to move upward to a position above the conveying surface of the roller conveyor 100, it blocks the traveling path of the glass, and completes the angular correction of the transverse edge of the glass by means of a friction force between the glass and the conveying surface.

In an embodiment, in order to satisfy the requirement of rotational lifting of the first lifting mechanism 210, each stopper 221 includes a connecting portion 2211 and a stopping portion 2212, wherein the connecting portion 2211 is obliquely fixed to the first lifting mechanism 210, aiming to ensure that the stopper 221 does not collide with the conveying rollers during the rotation of the first lifting mechanism 210. The stopping portion 2212 is vertically installed at a preset angle with respect to the connecting portion 2211, so as to ensure that when the first lifting mechanism 210 rotates up to a preset position, a stopping face on the stopping portion 2212 is perpendicular to the conveying surface.

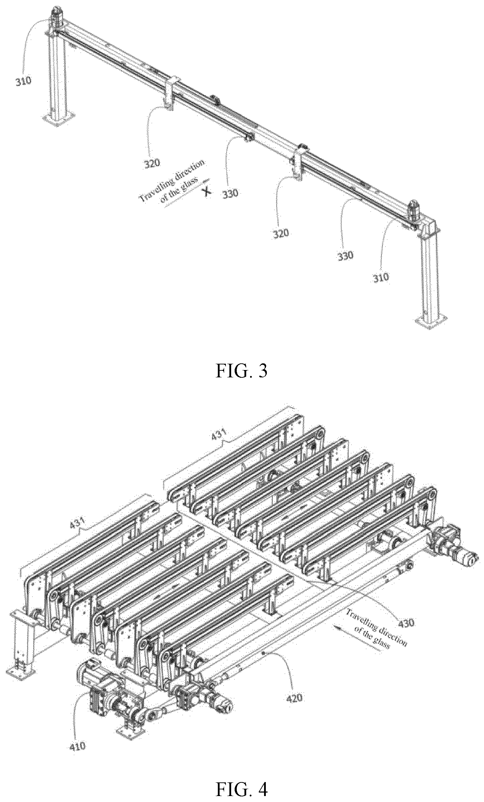

FIG. 3 is a schematic structural diagram of an edge measuring device according to an embodiment of the present disclosure. Referring to FIG. 3, the edge measuring device 300 includes a servo motor 310, a linear module 320, and one or more photoelectric detectors 330. The linear module 320 is arranged above the conveying surface of the roller conveyor 100, and the linear module 320 includes one or more sliding blocks which slide in the Y-axis direction. The servo motor 310 is configured to drive the linear module 320 to operate. The photoelectric detectors 330 are mounted on the sliding blocks of the linear module 320 and move along the Y-axis direction, and are configured to collect positional information of the longitudinal edge of the glass, so as to determine the distance L between the longitudinal edge of the glass and the preset positioning line. The edge measuring device is arranged in the Y-axis direction, and the photoelectric detectors 330 are distributed on both sides relative to the center line of the conveying surface, thus feeding back positional information of the two longitudinal edges of the glass. Specifically, the position of the longitudinal edges of the glass relative to the center line of the conveying surface is determined by photoelectric information collected by the photoelectric detector 330 and the positional information provided by an encoder of the servo motor 310.

FIG. 4 is a schematic structural diagram of a lifting conveying device according to an embodiment of the present disclosure. Referring to FIG. 4, the lifting conveying device 400 includes a gear motor 410, a second lifting mechanism 420, and a conveying assembly 430. The gear motor 410 is configured to drive the second lifting mechanism 420 to operate, and the conveying assembly 430 is arranged on the second lifting mechanism 420. The second lifting mechanism 420 is configured to drive the conveying assembly 430 to move upward and downward relative to the conveying surface in a Z-axis direction. The conveying assembly 430 is uniformly arranged among the conveying rollers in the longitudinal edge alignment zone 120, and the conveying assembly 430 independently operates in the Y-axis direction to adjust a distance between the glass and the preset positioning line. A four-bar lifting mechanism is used as the second lifting mechanism 420, that is, the gear motor 410 drives the four-bar lifting mechanism to operate, thereby driving the conveying assembly 430 mounted on the four-bar lifting mechanism to move upward and downward in the Z direction relative to the conveying surface of the roller conveyor 100.

In an embodiment, in order to realize the single-piece gripping and dual-piece gripping functions, the conveying assembly 430 includes a left piece and a right piece in the Y direction, and the left piece and the right piece are distributed on both sides relative to the center line of a production line. Specifically, the conveying assembly 430 includes two conveying members 431 (i.e., left conveying members and right conveying members) which are arranged in the longitudinal edge alignment zone 120 in the Y-axis direction and symmetrically distributed relative to the center line of the conveying surface. Each conveying member 431 can operate independently. The conveying assembly 430 is arranged spaced apart and a pair of left conveying member and right conveying member are arranged between two adjacent conveying rollers. The conveying assembly 430 may be raised or lowered in the Z direction, especially, when the conveying assembly 430 moves upward, the glass is lifted off the conveying surface. Additionally, the conveying assembly 430 operates independently in the Y direction to adjust the distance between the glass and the center line of the conveying surface.

In an embodiment, a controller is further included, and the controller is configured to control the operation of the roller conveyor 100, the raising and lowering of the edge stopping device 200, the movement of the edge measuring device 300, and the raising and lowering and operation of the lifting conveying device 400. Moreover, the controller is configured to collect positional information of the first detection device 510 and the second detection device 520.

In a second aspect, the present disclosure further provides a glass edge-aligning conveying method, wherein the glass edge-aligning conveying device according to any embodiment in the first aspect is used, and the method includes the following steps:
Conveying a glass using a roller conveyor 100, and setting a positioning line on the roller conveyor 100 (which is referred to as a preset positioning line below).

When a first detection device 510 detects that the glass enters a transverse edge correction zone 110, raising an edge stopping device 200 to a position above a conveying surface of the roller conveyor 100, so that when the glass is conveyed to the edge stopping device 200, transverse edges of the glass contact with the edge stopping device 200 and then the glass stops upon abutting against the edge stopping device 200, thereby realizing alignment of the transverse edges of the glass. Specifically, when a front edge of the glass enters the transverse edge correction zone 110, the first detection device 510 feeds back the positional information of the glass, and then a stopper assembly 220 is raised until its upper top face is higher than the conveying surface and positional information of the glass in an X-axis direction is calculated, when the front edge of the glass is close to the stopper assembly 220, the glass is decelerated in the transverse edge correction zone 110 of the roller conveyor 100 and stopped after making in contact with the stopper assembly 220 for a certain period of time △t, afterwards, the transverse edges of the glass are aligned by means of a frictional force between the glass and the conveying surface in the time △t, and the stopper assembly is lowered to a position below the roller face (i.e., the conveying surface).

Moving an edge measuring device 300 in a Y-axis direction to measure a distance L between a longitudinal edge of the glass and the preset positioning line. If a dual-piece gripping function is required, moving two photoelectric detectors 330 in the Y direction at the same time, so that distances L1 and L2 between the longitudinal edges of the glasses and a center line of the conveying surface are calculated and obtained; if a single-piece gripping function is required, moving one of the photoelectric detectors 330 in the Y direction, so that a distance L1 between a longitudinal edge of the glass and the center line of a production line (i.e., the conveying surface) is calculated and obtained.

After the measurement is completed, lowering the edge stopping device 200 to a position below the conveying surface of the roller conveyor 100, so that the glass continues to move forward o the roller conveyor. That is, the glass in the transverse edge correction zone 110 restarts to move and is driven to enter the longitudinal edge alignment zone 120.

When a second detection device 520 detects that the glass enters the longitudinal edge alignment zone 120, calculating and obtaining the positional information of the glass in the Y direction by the second detection device 520, and when the glass is conveyed to a position directly above a lifting conveying device 400, slowing down and stopping conveying rollers in the longitudinal edge alignment zone 120.

Raising the lifting conveying device 400 to a position above the conveying surface and driving the glass to move in the Y-axis direction, so that the glass moves for a compensated distance (i.e., L-length in the Y-axis of the glass/2) towards the preset positioning line, thereby realizing alignment of the longitudinal edges of the glass. That is, two groups of conveying assemblies 430 are raised to lift the glass off the conveying surface. If the dual-piece gripping function is required, two conveying members 431 are driven to move for two compensated distances (i.e., L1-length in the Y-axis of the glass/2, and L2-length in the Y-axis of the glass/2), respectively, in the Y direction relative to the center line of the conveying surface. If the single-piece gripping function is required, the two conveying members 431 are driven to move for a compensated distance (i.e., L1-length in the Y-axis of the glass/2) in the same direction along the Y-axis direction relative to the center line of the production line (i.e., the conveying surface), thereby realizing the alignment of the longitudinal edges of the glass.

Lowering the lifting conveying device 400 to a position below the conveying surface, and conveying the glass on the roller conveyor 100 to a stacking zone. That is, the conveying assembly 430 is lowered to the position below the conveying surface, and the glass in the longitudinal edge alignment zone 120 restarts to move and is driven to enter the stacking zone. When the next group of glass arrives, the above steps are repeated.

In an embodiment, the preset positioning line is a center line of the roller conveyor in the X-axis direction, namely, the conveying center line of the conveying surface.

In an embodiment, when the glass is conveyed to the edge stopping device 200, transverse edges of the glass contact with the edge stopping device 200 and then the glass stops upon abutting against the edge stopping device 200 includes:
according to a first time point when the first detection device 510 detects that the glass enters the transverse edge correction zone 110, and combined with an operating speed of the roller conveyor 100, calculating a second time point when the glass is conveyed to a position of the edge stopping device 200; and
slowing down the conveying rollers of the roller conveyor 100 before the second time point, so that the glass contacts with the edge stopping device 200 at a low speed and stops upon abutting against the edge stopping device 200 in a preset time due to a friction force between the glass and the conveying surface.

The above descriptions are merely preferred embodiments of the present disclosure and are not intended to limit the present disclosure. For those skilled in the art, the present disclosure may have various modifications and changes. Any modification, equivalent replacement, or improvement made without departing from the spirit and principle of the present disclosure shall fall within the protection scope of the present disclosure.

## Claims

1. A glass edge-aligning conveying device , comprising:
a roller conveyor, configured to convey a glass in an X-axis direction, wherein the roller conveyor comprises a transverse edge correction zone and a longitudinal edge alignment zone which operate independently;
a first detection device, arranged at an entrance of the transverse edge correction zone and configured to detect whether the glass enters the transverse edge correction zone;
an edge stopping device, arranged at an exit of the transverse edge correction zone, wherein the edge stopping device is capable of moving upward or downward relative to a conveying surface of the roller conveyor, and when the first detection device detects that the glass enters the transverse edge correction zone, the edge stopping device moves above the conveying surface of the roller conveyor to block movement of the glass in the X-axis direction, thereby realizing alignment of transverse edges of the glass;
an edge measuring device, arranged close to the edge stopping device, wherein the edge measuring device is capable of moving in a Y-axis direction and configured to measure a distance L between a longitudinal edge of the glass and a preset positioning line;
a second detection device, arranged at an entrance of the longitudinal edge alignment zone and configured to detect whether the glass enters the longitudinal edge alignment zone; and
a lifting conveying device, arranged in the longitudinal edge alignment zone, wherein the lifting conveying device is capable of being raised or lowered relative to the conveying surface of the roller conveyor, and when the second detection device detects that the glass enters the longitudinal edge alignment zone, the lifting conveying device is raised above the conveying surface to drive the glass to move for a compensated distance in the Y-axis direction towards the preset positioning line, thereby realizing alignment of the longitudinal edges of the glass.

2. The device according to claim 1, wherein the edge stopping device comprises a first lifting mechanism, a stopper assembly, and a driving element,
wherein the driving element is connected to the first lifting mechanism and drives the same, the stopper assembly is mounted on the first lifting mechanism and driven by the first lifting mechanism to move upward or downward relative to the conveying surface of the roller conveyor, and the stopper assembly is arranged between two adjacent conveying rollers and comprises a plurality of stoppers uniformly arranged in the Y-axis direction, wherein each stopper forms a preset angle with the conveying surface of the roller conveyor to align the transverse edges of the glass.

3. The device according to claim 1, wherein each stopper comprises a connecting portion and a stopping portion, the connecting portion is obliquely fixed to the first lifting mechanism, the stopping portion is vertically installed at a preset angle with respect to the connecting portion, and when the first lifting mechanism rotates up to a preset position, a stopping face on the stopping portion is perpendicular to the conveying surface.

4. The device according to claim 1, wherein the edge measuring device comprises a servo motor, a linear module, and a photoelectric detector, wherein the linear module is arranged above the roller conveyor and comprises a sliding block which slides in the Y-axis direction, the servo motor is configured to drive the linear module to operate, the photoelectric detector is mounted on the sliding block and moves along with the same, and the photoelectric detector is configured to collect positional information of the longitudinal edge of the glass, so as to determine the distance L between the longitudinal edge of the glass and the preset positioning line.

5. The device according to claim 1, wherein the lifting conveying device comprises a gear motor, a second lifting mechanism, and one or more conveying assemblies, wherein the gear motor is configured to drive the second lifting mechanism to operate, the one or more conveying assemblies are arranged on the second lifting mechanism, and the second lifting mechanism is configured to drive the one or more conveying assemblies to move upward or downward relative to the conveying surface in a Z-axis direction, the one or more conveying assemblies are uniformly arranged among the conveying rollers in the longitudinal edge alignment zone, and the one or more conveying assemblies independently operate in the Y-axis direction to adjust a distance between the glass and the preset positioning line.

6. The device according to claim 5, wherein each of the one or more conveying assemblies comprises two conveying members which are arranged in the longitudinal edge alignment zone in the Y-axis direction and symmetrically distributed relative to a center line of the conveying surface, and the conveying members are capable of independently operating.

7. The device according to claim 1, further comprising a controller, wherein the controller is configured to control the operation of the roller conveyor, the raising and lowering of the edge stopping device, the movement of the edge measuring device, and the raising and lowering and operation of the lifting conveying device, and collect positional information of the first detection device and the second detection device.

8. A glass edge-aligning conveying method, wherein the glass edge-aligning conveying device according to any one of claims 1-7 is used, and the method comprises:
conveying the glass using the roller conveyor, and setting a preset positioning line on the roller conveyor;
when the first detection device detects that the glass enters the transverse edge correction zone, raising the edge stopping device to a position above the conveying surface of the roller conveyor, so that when the glass is conveyed to the edge stopping device, transverse edges of the glass contact with the edge stopping device and then the glass stops upon abutting against the edge stopping device, thereby realizing alignment of the transverse edges of the glass;
moving the edge measuring device in the Y-axis direction to measure the distance L between the longitudinal edge of the glass and the preset positioning line;
after the measurement is completed, lowering the edge stopping device to a position below the conveying surface of the roller conveyor, so that the glass continues to move forward on the roller conveyor;
when the second detection device detects that the glass enters the longitudinal edge alignment zone, raising the lifting conveying device to a position above the conveying surface and driving the glass to move in the Y-axis direction, so that the glass moves for a compensated distance towards the preset positioning line, thereby realizing alignment of the longitudinal edges of the glass; and
lowering the lifting conveying device to a position below the conveying surface, so as to convey the glass on the roller conveyor to a stacking zone.

9. The method according to claim 8, wherein the preset positioning line is a center line of the roller conveyor in the X-axis direction.

10. The method according to claim 8, wherein the step that when the glass is conveyed to the edge stopping device, the transverse edges of the glass contact with the edge stopping device and then the glass stops upon abutting against the edge stopping device comprises:
according to a first time point when the first detection device detects that the glass enters the transverse edge correction zone, and combined with an operating speed of the roller conveyor, calculating a second time point when the glass is conveyed to a position of the edge stopping device; and
slowing down the conveying rollers of the roller conveyor before the second time point, so that the glass contacts with the edge stopping device at a low speed and stops upon abutting against the edge stopping device in a preset time.
